# EUROPÄISCHE PATENTANMELDUNG

(11) **EP 1 209 477 A2**
(43) Veröffentlichungstag der Anmeldung: **29.05.2002**
(21) Anmeldenummer: 01119846.2
(22) Anmeldetag: 16.08.2001
(51) Int. Cl.: G01R 31/28

(54) **Schaltungsanordnung zur Erfassung des Zustandes von mindestens einem elektrischen Betätigungselement**

(30) Priorität: 27.09.2000 DE 10047907
(71) Anmelder: SIEMENS AKTIENGESELLSCHAFT, 80333 München (DE)
(72) Erfinder: Murr, Robert, 93092 Barbing (DE)

(57) **Zusammenfassung**

Schaltungsanordnung zur Erfassung des Zustandes von mindestens einem elektrischen Betätigungselement (S1, S2, S3, S4), mit einem Signaleingang (IN) zur Aufnahme eines den Zustand des Betätigungselements (S1, S2, S3, S4) wiedergebenden Eingangssignals, einem Signalausgang (OUT) zur Abgabe eines den Zustand des Betätigungselements (S1, S2, S3, S4) wiedergebenden Ausgangssignals, einem Steuerausgang zur Abgabe eines Aktivierungssignals (WAKE-UP-SIGNAL) für eine Auswertungseinheit (µC), um die Auswertungseinheit (µC) von einem inaktiven Betriebszustand in einen aktiven Betriebszustand zu versetzen, sowie einer eingangsseitig mit dem Signaleingang (IN) und ausgangsseitig mit dem Steuerausgang verbundenen Steuereinheit (C1, D1, R6) zur Erzeugung des Aktivierungssignals (WAKE-UP-SIGNAL) in Abhängigkeit von dem Eingangssignal, wobei das an dem Signaleingang (IN) anliegende Eingangssignal ein analoges Signal ist, wobei die Steuereinheit das Aktivierungssignal (WAKE-UP-SIGNAL) für die Auswertungseinheit (µC) erzeugt, wenn das Eingangssignal innerhalb eines vorgegebenen Wertebereichs liegt.

## Beschreibung

Schaltungsanordnung zur Erfassung des Zustandes von mindestens einem elektrischen Betätigungselement

Die Erfindung betrifft eine Schaltungsanordnung zur Erfassung des Zustandes von mindestens einem elektrischen Betätigungselement, insbesondere zur Erfassung einer Betätigung von Schaltelementen in einem Kraftfahrzeug, gemäß dem Oberbegriff des Anspruchs 1.

Bei modernen Kraftfahrzeugen erfolgt die Steuerung elektrischer Verbraucher, wie beispielsweise der Innenraumbeleuchtung, durch einen Mikroprozessor in Abhängigkeit von dem Schaltzustand mehrerer Schaltelemente wie beispielweise Türkontaktschalter, Kofferraumverschlussschalter und Zündschlossschalter. Nachteilig hieran ist, dass der Mikroprozessor bei der Überprüfung des Schaltzustandes der einzelnen Schaltelemente Strom verbraucht, was insbesondere bei längeren Standzeiten des Kraftfahrzeugs zu einer erheblichen Belastung der Fahrzeugbatterie führt.

Zur Lösung dieses Problems ist aus der deutschen Patentschrift DE 44 14 734 C2 eine Schaltungsanordnung bekannt, welche die Schaltelemente überwacht und den Mikroprozessor lediglich im Falle einer Betätigung eines der Schaltelemente in einen aktiven Betriebszustand schaltet, wohingegen der Mikroprozessor ansonsten in einem sog. Stand-By-Modus mit geringem Stromverbrauch betrieben wird. Hierdurch wird der Stromverbrauch des Mikroprozessors während der Standzeiten des Kraftfahrzeugs wesentlich verringert. Die Überwachung des Schaltzustandes der einzelnen Schaltelmente erfolgt hierbei, indem diese jeweils über Vorwiderstände mit getakteten Spannungsimpulsen beaufschlagt werden, wobei eine Spannungsmesseinheit die über den einzelnen Schaltelementen abfallende Spannung misst, welche den Schaltzustand des jeweiligen Schaltelementes wiedergibt. So wird das elektrische Potential am Eingang der Spannungsmesseinheit beim Durchschalten eines der Schaltelemente auf Masse gezogen, wohingegen das elektrische Potential am Eingang der Spannungsmesseinheit bei geöffneten Schaltelementen der Versorgungsspannung entspricht. Die bekannte Schaltungsanordnung ermöglicht also eine stromsparende Abfrage digitaler Schaltelemente mit zwei Schaltzuständen.

Nachteilig an der vorstehend beschriebenen bekannten Schaltungsanordnung ist die Tatsache, dass an dem Signalausgang auch dann ein den Zustand der Schaltelemente wiedergebendes Ausgangssignal erzeugt wird, wenn überhaupt kein Schaltelement betätigt wird und demzufolge auch kein Ausgangssignal erforderlich ist, das den Zustand der Schaltelemente wiedergibt. Die bekannte Schaltungsanordnung ist also während der getakteten Spannungsimpulse stets in einem aktiven Betriebszustand, wodurch unnötig elektrische Energie verbraucht wird.

Aus DE 33 12 153 A1 ist eine Schaltungsanordnung zur Abfrage von mehreren Tastschaltern bekannt, die eine Auswertungseinheit aufweist, wobei die Auswertungseinheit von einem inaktiven stromsparenden Betriebszustand in einen aktiven Betriebszustand versetzt werden kann. Hierzu weist die bekannte Schaltungsanordnung eine Steuereinheit auf, die bei der Betätigung eines der Tastschalter die Betriebsspannung für die Auswertungseinheit einschaltet, so dass die Auswertungseinheit die Schaltzustände der einzelnen Tastschalter auswerten kann. Nachteilig hieran ist, dass vor der Aktivierung der Auswertungseinheit zunächst die gesamte Spannungsversorgung hochgefahren werden muß, so dass die Aktivierung der Auswertungseinheit nur mit einer bestimmten Zeitverzögerung möglich ist.

Schließlich ist aus der älteren, nachveröffentlichten Druckschrift DE 199 17 819 A1 eine Schaltungsanordnung zum Erfassen von Schaltzuständen von Schaltern zur Aktivierung einer Kraftfahrzeugelektronik bekannt, wobei die Schaltungsanordnung ein Wake-Up-Signal erzeugt, wenn wenigstens ein Schalter von einem ersten definierten Schaltzustand in einen zweiten definierten Schaltzustand übergeht, wobei die Schaltungsanordnung so ausgebildet ist, dass sie das Wake-Up-Signal auch bei einem Übergang des zweiten Schaltzustandes in den ersten Schaltzustand erzeugt.

Der Erfindung liegt die Aufgabe zugrunde, die eingangs beschriebenen bekannten Schaltungsanordnungen dahingehend zu verbessern, dass der elektrische Energieverbrauch minimal ist und trotzdem eine schnelle Aktivierung der Auswertungseinheit möglich ist.

Die Aufgabe wird, ausgehend von der eingangs beschriebenen bekannten Schaltungsanordnung gemäß dem Oberbegriff des Anspruchs 1, durch die kennzeichnenden Merkmale des Anspruchs 1 gelöst.

Die Erfindung umfasst die allgemeine technische Lehre, zur Abfrage der Betätigungselemente keinen Diskriminator mit einem vorgegebenen Schwellenwert einzusetzen, sondern vielmehr eine Schaltung vorzusehen, die gegenüber Bauteilschwankungen des Durchlass- bzw. Sperrwiderstands der Betätigungselemente unempfindlich sind.

Vorzugsweise sind an dem Signaleingang der erfindungsgemäßen Schaltungsanordnung mehrere Schaltelemente parallel angeschlossen, die jeweils unterschiedliche Sperr- bzw. Durchlasswiderstände aufweisen.

In der bevorzugten Ausführungsform der Erfindung ist der Signaleingang der erfindungsgemäßen Schaltungsanordnung über einen Spannungsteiler mit dem Signalausgang der Schaltungsanordnung verbunden, um ausgangsseitig ebenfalls ein analoges Signal ausgeben zu können.

Erfindungsgemäß ist hierbei zwischen dem Signaleingang und dem Signalausgang ein steuerbares Schaltelement angeordnet, das in Abhängigkeit von seinem Schaltzustand wahlweise einen aktiven Betriebszustand oder einen inaktiven Betriebszustand der Schaltungsanordnung ermöglicht, wobei das den Zustand des Betätigungselementes wiedergebende Ausgangssignal nur in dem aktiven Betriebszustand des Schaltelements abgegeben wird. Die erfindungsgemäße Schaltungsanordnung erfasst also eingangsseitig permanent das den Zustand des Betätigungselementes wiedergebende Eingangssignal, um eine separate Auswertungseinheit bei einer Aktivierung des Betätigungselementes in einen aktiven Betriebszustand versetzen zu können. Die Auswertungseinheit besteht beispielsweise aus einem Mikroprozessor bzw. einer zugehörigen Stromversorgung, wobei die Auswertungseinheit bei einer Aktivierung auch die erfindungsgemäße Schaltungsanordnung aktiviert, in dem der Steuereingang des zwischen dem Signaleingang und dem Signalausgang angeordneten Schaltelements entsprechend angesteuert wird.

Bei dem steuerbaren Schaltelement der erfindungsgemäßen Schaltungsanordnung handelt es sich vorzugsweise um einen Transistor, der beispielsweise als N-Kanal MOSFET ausgeführt sein kann.

In der bevorzugten Ausführungsform der Erfindung ist der Durchgangswiderstand des steuerbaren Schaltelementes der Schaltungsanordnung im aktivierten Betriebszustand □ 1 Ω, um das Ausgangssignal möglichst wenig zu verfälschen. In diesem Fall fließen Ströme von bis zu 20 mA über den N-MOSFET, was einen noch akzeptablen Spannungsabfall von bis zu 20 mV erzeugt. Ein größerer Durchgangswiderstand des N-MOSFETS würde einen zusätzlichen Fehler bei der Spannungsmessung verursachen.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figur näher erläutert. Es zeigt:

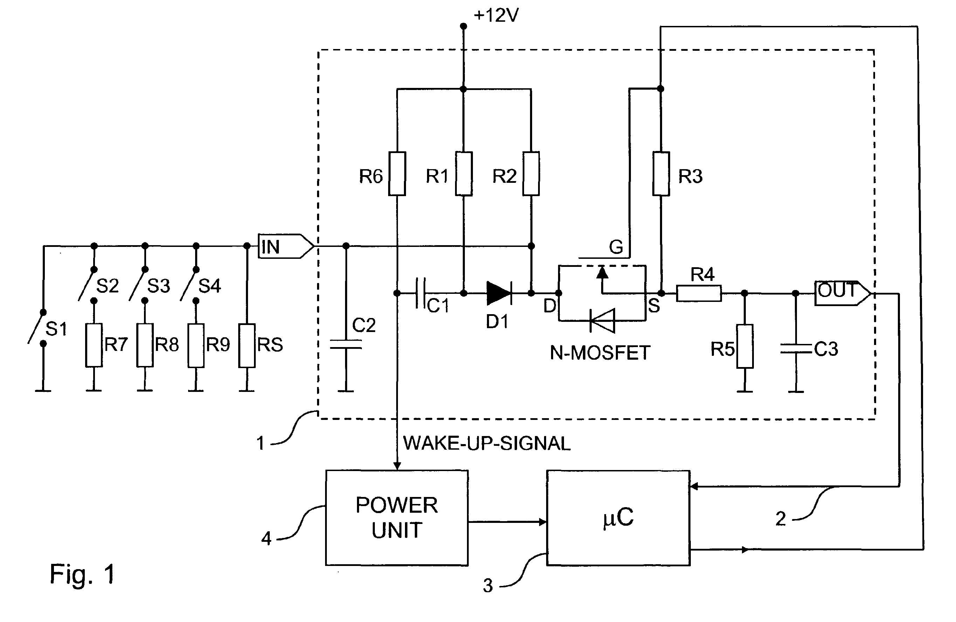

- Figur 1: die erfindungsgemäße Schaltungsanordnung als Blockschaltbild.

Das in Figur 1 dargestellte bevorzugte Ausführungsbeispiel einer erfindungsgemäßen Schaltungsanordnung 1 ermöglicht die Abfrage von mehreren Schaltelementen S1-S4, die im durchgeschalteten Zustand unterschiedliche Innenwiderstände R7=100 Ω, R8=270 Ω, R9=820 Ω aufweisen. Hierzu verfügt die Schaltungsanordnung 1 über einen Signaleingang IN, an dem die Schaltelemente S1-S4 parallel angeschlossen sind. Darüber hinaus ist der Signaleingang IN auch noch über einen Widerstand RS=5 kΩ mit Masse verbunden, wobei der Widerstand RS parasitäre Strompfade berücksichtigt.

Eingangsseitig weist die Schaltungsanordnung 1 einen Pufferkondensator C2=10 nF auf, der den Signaleingang mit Masse verbindet und Schaltspitzen glättet.

Darüber hinaus weist die erfindungsgemäße Schaltungsanordnung 1 einen Signalausgang OUT auf, der über eine Signalleitung 2 mit einem Mikroprozessor 3 verbunden ist, um das an dem Signaleingang IN der Schaltungsanordnung 1 anliegende analoge Eingangssignal dem Mikroprozessor 3 zur Auswertung zuzuführen.

Der Mikroprozessor 3 kann hierbei in einem stromsparenden inaktiven Betriebszustand und in einem aktiven Betriebszustand betrieben werden, der durch eine Stromversorgungseinheit 4 vorgegeben wird, wobei die Stromversorgungseinheit 4 wiederum von der Schaltungsanordnung 1 durch ein Aktivierungssignal (Wake-Up-Signal) angesteuert wird. Die Schaltungsanordnung 1 erfasst also den Schaltzustand der Schaltelemente S1-S4 und gibt bei einer Betätigung eines der Schaltelemente S1-S4 ein Aktivierungssignal an die Stromversorgungseinheit 4, die den Mikroprozessor 3 daraufhin in den aktiven Betriebszustand versetzt, was eine Abfrage und Auswertung des an dem Signalausgang OUT der Schaltungsanordnung 1 erscheinenden analogen Ausgangssignals ermöglicht.

Die Schaltungsanordnung 1 gibt das analoge Ausgangssignal jedoch nur in einem aktiven Betriebszustand aus, wohingegen in einem inaktiven Betriebszustand der Schaltungsanordnung 1 ausschließlich eine Änderungsabfrage der Schaltelemente S1-S4 erfolgt. Der Mikroprozessor 3 versetzt die Schaltungsanordnung 1 deshalb nach seiner Aktivierung ebenfalls in den aktiven Betriebszustand, damit am Signalausgang OUT der Schaltungsanordnung das analoge Ausgangssignal erscheint. Im folgenden wird nun der Aufbau der Schaltungsanordnung 1 beschrieben, um anschließend unter Bezugnahme auf die Beschreibung des strukturellen Aufbaus der Schaltungsanordnung 1 deren Funktionsweise zu erläutern.

Der Signaleingang IN ist über einen N-Kanal MOSFET und einen aus zwei ohmschen Widerständen R4=75 kΩ und R5=33 kΩ bestehenden Spannungsteiler mit dem Signalausgang verbunden, wobei der N-Kanal MOSFET im aktiven Betriebszustand der Schaltungsanordnung 1 durchschaltet, wohingegen der N-Kanal MOSFET im inaktiven Betriebszustand der Schaltungsanordnung 1 sperrt.

Der Signalausgang OUT der Schaltungsanordnung 1 ist über einen Pufferkondensator C3=1 nF mit Masse verbunden, um das Ausgangssignal zu glätten.

Der Drain-Anschluss des N-Kanal MOSFETs ist über eine Reihenschaltung aus einer Diode D1 vom Typ BAV70, einem Kondensator C1=100 nF und einem Widerstand R6=10 kΩ mit einer Versorgungsspannung von +12 V verbunden. Weiterhin ist zwischen dem Widerstand R6 und dem Kondensator C1 ein Spannungsabgriff vorgesehen, der einen Steuerausgang zur Abgabe des Aktivierungssignals für den Mikroprozessor bildet.

Darüber hinaus ist der Drain-Anschluss des N-Kanal MOSFETs über einen Widerstand R2=80 kΩ mit der Versorgungsspannung von +12 V verbunden. Der Widerstand R2 hält die Spannung an dem Signaleingang IN kontinuierlich auf dem Spannungspegel der Versorgungsspannung von +12 V, solange die Schaltelemente S1-S4 geöffnet sind.

Ferner ist zwischen der Diode D1 und dem Kondensator C1 noch ein Spannungsabgriff vorgesehen, der über einen Widerstand R1=100 kΩ mit der Versorgungsspannung von +12 V verbunden ist. Der Widerstand R1 ermöglicht eine Entladung des Kondensators C1 nach einem Wake-Up-Ereignis.

Die Ansteuerung des N-Kanal MOSFETs erfolgt durch den Mikroprozessor 3, der hierzu indirekt mit dem Gate-Anschluss G des N-Kanal MOSFETs verbunden ist. Darüber hinaus ist der Gate-Anschluss G noch über einen Widerstand R3=620 Ω mit dem Source-Anschluss des N-Kanal MOSFETs verbunden.

Im folgenden wird nun unter Bezugnahme auf die vorstehende Beschreibung des schaltungstechnischen Aufbaus der Schaltungsanordnung 1 die Funktionsweise der Schaltungsanordnung 1 beschrieben.

Im inaktiven Zustand der Schaltungsanordnung 1 wird das an dem Signaleingang IN anliegende analoge Eingangssignal nicht auf den Signalausgang OUT durchgeführt, sondern lediglich abgefragt, um die Betätigung eines der Schaltelemente S1-S4 zu erkennen und den Mikroprozessor 3 daraufhin in den aktiven Betriebszustand versetzen zu können. In dem inaktiven Betriebszustand der Schaltungsanordnung 1 sorgt der Widerstand R2 dafür, dass an dem Signaleingang IN der Schaltungsanordnung 1 im wesentlichen die Versorgungsspannung von +12 V anliegt, solange die Schaltelemente S1-S4 geöffnet sind. Beim Schließen eines der Schaltelemente S1-S4 fließt dagegen ein Strom von der Versorgungsspannung +12 V über den Widerstand R6, den Kondensator C1, die Diode D1, den Signaleingang IN und das durchgeschaltete Schaltelement S1, S2, S3 bzw. S4 gegen Masse. Dieser Strom führt zu einem Aufladen des Kondensators C1, was sich an dem Steuerausgang der Schaltungsanordnung als Spannungsimpuls äußert und zu einer Aktivierung der Stromversorgungseinheit 4 bzw. des Mikroprozessors 3 führt. Der Mikroprozessor gibt daraufhin alle 10 ms einen Spannungsimpuls mit einer Dauer von 500 µs und einer Amplitude von +12 V an den Gate-Anschluss des N-Kanal MOSFETs, der daraufhin durchschaltet, so dass der Signaleingang IN der Schaltungsanordnung 1 niederohmig mit dem Spannungsteiler R4, R5 verbunden wird. An dem Signalausgang OUT der Schaltungsanordnung 1 erscheint dann ein den Zustand des Schaltelementes S1, S2, S3 bzw. S4 wiedergebendes analoges Ausgangssignal, das von dem Mikroprozessor 3 ausgewertet werden kann.

Im durchgeschalteten Zustand ist der Durchgangswiderstand des N-Kanal MOSFETs zwischen dem Source-Anschluss und dem Drain-Anschluss □ 1 Ω, um das analoge Ausgangssignal möglichst wenig zu verfälschen. In diesem Fall fließen Ströme von bis zu 20 mA über den Widerstand R3 und den MOSFET, die zu einem Spannungsabfall über dem MOSFET von bis zu 20 mV führen. Ein größerer Durchlasswiderstand des MOSFETs würde zusätzliche Fehler bei der Spannungsmessung verursachen.

Die Erfindung ist nicht auf das vorstehend beschriebene bevorzugte Ausführungsbeispiel beschränkt. Vielmehr ist eine Vielzahl von Varianten und Abwandlungen denkbar, die von dem Erfindungsgedanken Gebrauch machen und deshalb ebenfalls in den Schutzbereich fallen.

## Patentansprüche

1. Schaltungsanordnung zur Erfassung des Zustandes von mindestens einem elektrischen Betätigungselement (S1, S2, S3, S4), mit
einem Signaleingang (IN) zur Aufnahme eines den Zustand des Betätigungselements (S1, S2, S3, S4) wiedergebenden Eingangssignals,
einem Signalausgang (OUT) zur Abgabe eines den Zustand des Betätigungselements (S1, S2, S3, S4) wiedergebenden Ausgangssignals,
einem Steuerausgang zur Abgabe eines Aktivierungssignals (WAKE-UP-SIGNAL) für eine Auswertungseinheit (µC), um die Auswertungseinheit (µC) von einem inaktiven Betriebszustand in einen aktiven Betriebszustand zu versetzen, sowie
einer eingangsseitig mit dem Signaleingang (IN) und ausgangsseitig mit dem Steuerausgang verbundenen Steuereinheit (C1, D1, R6) zur Erzeugung des Aktivierungssignals (WAKE-UP-SIGNAL) in Abhängigkeit von dem Eingangssignal,
wobei das an dem Signaleingang (IN) anliegende Eingangssignal ein analoges Signal ist, wobei die Steuereinheit das Aktivierungssignal (WAKE-UP-SIGNAL) für die Auswertungseinheit (µC) erzeugt, wenn das Eingangssignal innerhalb eines vorgegebenen Wertebereichs liegt,
**dadurch gekennzeichnet,**
**daß** zwischen dem Signaleingang (IN) und dem Signalausgang (OUT) ein steuerbares Schaltelement (N-MOSFET) angeordnet ist, das in Abhängigkeit von seinem Schaltzustand wahlweise einen aktiven Betriebszustand oder einen inaktiven Betriebszustand der Schaltungsanordnung ermöglicht, wobei das den Zustand des Betätigungselements (S1, S2, S3, S4) wiedergebende Ausgangssignal nur in dem aktiven Betriebszustand des Schaltelements (N-MOSFET) abgegeben wird.

2. Schaltungsanordnung nach Anspruch 1,
**dadurch gekennzeichnet,**
**daß** an dem Signaleingang (IN) mehrere Schaltelemente (S1, S2, S3, S4) angeschlossen sind, die im durchgeschalteten Zustand unterschiedliche Durchgangswiderstände aufweisen.

3. Schaltungsanordnung nach mindestens einem der vorhergehenden Ansprüche,
**dadurch gekennzeichnet,**
**daß** der Signaleingang (IN) über einen Spannungsteiler (R4, R5) mit dem Signalausgang (OUT) verbunden ist.

4. Schaltungsanordnung nach einem der vorhergehenden Ansprüche,
**dadurch gekennzeichnet,**
**daß** das steuerbare Schaltelement (N-MOSFET) einen Steuereingang aufweist, der mit der Auswertungseinheit (µC) verbunden ist, um die Schaltungsanordnung bei einer Aktivierung der Auswertungseinheit (µC) ebenfalls in den aktiven Betriebszustand zu versetzen.

5. Schaltungsanordnung nach einem der vorhergehenden Ansprüche,
**dadurch gekennzeichnet,**
**daß** das Schaltelement (N-MOSFET) ein Transistor ist.

6. Schaltungsanordnung nach Anspruch 5,
**dadurch gekennzeichnet,**
**daß** das Schaltelement (N-MOSFET) ein MOSFET-Transistor ist.

7. Schaltungsanordnung nach mindestens einem der vorhergehenden Ansprüche,
**dadurch gekennzeichnet,**
**daß** der Widerstand des Schaltelements im aktivierten Betriebszustand kleiner als 1 Ohm ist, um das Ausgangssignal möglichst wenig zu verfälschen.

8. Schaltungsanordnung nach mindestens einem der vorhergehenden Ansprüche,
**dadurch gekennzeichnet,**
**daß** der Signaleingang (IN) über einen Widerstand (R2) mit einer Spannungsquelle verbunden ist, um den Signaleingang (IN) im inaktiven Betriebszustand des Schaltelements (N-MOSFET) im wesentlichen auf dem vorgegebenen Spannungspegel der Spannungsquelle zu halten.

9. Schaltungsanordnung nach mindestens einem der vorhergehenden Ansprüche,
**dadurch gekennzeichnet,**
**daß** der Signaleingang (IN) über eine Reihenschaltung aus einer Diode und einem Kondensator und einem Widerstand mit einer Spannungsquelle verbunden, wobei die Reihenschaltung einen mit dem Steuerausgang verbundenen Spannungsabgriff aufweist.

10. Schaltungsanordnung nach mindestens einem der vorhergehenden Ansprüche,
**dadurch gekennzeichnet,**
**daß** der Signaleingang (IN) über einen Pufferkondensator (C2) mit Masse verbunden ist.

11. Schaltungsanordnung nach mindestens einem der vorhergehenden Ansprüche,
**dadurch gekennzeichnet,**
**daß** der Signalausgang (OUT) über einen Pufferkondensator (C3) mit Masse verbunden ist.
